# EUROPÄISCHE PATENTSCHRIFT

(11) **EP 2 422 332 B1**
(45) Veröffentlichungstag und Bekanntmachung des Hinweises auf die Patenterteilung: **16.12.2015**
(21) Anmeldenummer: 10705089.0
(22) Anmeldetag: 14.01.2010
(51) Int. Cl.: G08G 1/16, G01S 13/93, G06K 9/00, G06T 7/00

(54) **VERFAHREN ZUR KLASSIFIZIERUNG EINES OBJEKTS ALS HINDERNIS**
METHOD FOR CLASSIFYING AN OBJECT AS AN OBSTACLE
PROCEDE POUR CLASSER UN OBJET COMME UN OBSTACLE

(30) Priorität: 22.04.2009 DE 102009018453
(43) Veröffentlichungstag der Anmeldung: 29.02.2012
(73) Patentinhaber: Conti Temic Microelectronic GmbH, 90411 Nürnberg (DE)
(72) Erfinder: STEPHAN, Tobias, 88142 Wasserburg (DE); RANDLER, Martin, 88090 Immenstaad (DE); HANEL, Nele, 88131 Bodolz (DE); DINTZER, Philippe, 88079 Kressbronn (DE)
(74) Vertreter: Bobbert, Christiana
(86) Internationale Anmeldenummer: PCT/DE2010/000028
(87) Internationale Veröffentlichungsnummer: WO 2010/121584

(56) Entgegenhaltungen:
- WO-A1-2006/092361
- WO-A2-03/007271
- DE-A1- 19 832 790
- DE-A1-102007 036 175
- US-A1- 2003 001 771

## Beschreibung

Die Erfindung bezieht sich auf ein Verfahren zur Objektklassifizierung zum Einsatz in einem Fahrzeug mit einem Fahrerassistenzsystem.

Kraftfahrzeuge werden zunehmend mit Fahrerassistenzsystemen ausgerüstet, welche mit Hilfe von Sensorsystemen die Umgebung erfassen, Verkehrssituation erkennen und den Fahrer unterstützen, z.B. durch einen Brems- oder Lenkeingriff oder durch die Ausgabe einer Warnung. Von besonderer Bedeutung ist die korrekte Klassifizierung von Umgebungsobjekten, damit das Fahrerassistenzsystem nur auf echte Hindernisse reagiert.

Die Schrift WO03/007271A2 offenbart ein Verfahren und eine Vorrichtung zum selbststätigen Auslösen einer Verzögerung eines Fahrzeugs in Abhängigkeit von einer Kollisionswahrscheinlichkeit. Dazu werden stehende und bewegte Objekte im Umfeld eines Fahrzeugs erfasst. Stehende Objekt, die von bewegten Objekten (andere Fahrzeuge), die sich vor dem Fahrzeug in gleicher Richtung bewegen, über- bzw. unterfahren werden, werden für die Berechnung der Kollisionswahrscheinlichkeit nicht in Betracht gezogen.

Die Schrift DE102007036175A1 gibt ein Fahrzeugsteuerungssystem insbesondere zu einer Abstandregelung zwischen Fahrzeugen an. Die Umgebungsobjekte vor dem Fahrzeug werden erfasst. Damit ein Tor oder ein Gegenstand auf der Straße, die keine Hindernisse für das Fahrzeug darstellen, nicht irrtümlich als Hindernis erkannt wird, wird der Erfassungsschwellwert für ein stationäres Objekt in einem vorbestimmten Bereich höher festgesetzt im Vergleich zum Erfassungsschwellwert für ein bewegtes Objekt.

Die Schrift DE19832790 beschreibt ein Hindernis-Erkennungssystem für Kraftfahrzeuge.

Zur Identifizierung von Verkehrszeichen, die die Fahrbahn brückenmässig überspannen, insbesondere in Abgrenzung zu vorausfahrenden Fahrzeugen auf der Fahrbahn, wird eine Prüfung vorgeschlagen, ob die Objektbreite größer als 3,5m ist, da eine maximale Fahrzeugbreite 3,5m nicht übersteigt.

Die Schrift US2003/001771A1 betrifft ein Erkennungsverfahren für stationäre Objekte, das auf der Auswertung der von Objekten reflektierten Radarsignalen basiert. Mit dem Verfahren kann insbesondere eine Brücke erkannt werden.

Es ist die Aufgabe der Erfindung, ein Verfahren zur Klassifikation von Objekten in Hindernisse und Nichthindernisse anzugeben

Diese Aufgabe wird grundsätzlich mit Hilfe eines Verfahrens gemäß den Merkmalen des Anspruchs 1 gelöst.

Es wird ein Verfahren zur Klassifizierung von Objekten in Hindernisse und Nichthindernisse für ein Fahrzeug mit Umgebungserfassungssensor beansprucht, wobei mit dem Umgebungserfassungssensor stationäre und bewegte Objekte in einer Szene vor einem Fahrzeug erfasst werden. Ein Umgebungserfassungssensor ist z. B. ein Radarsensor oder ein Lidarsensor oder ein Kamerasensor. Das Verfahren zur automatischen Klassifikation von Objekten aus Sensordaten ist vorzugsweise auf einer Auswerteeinheit im Fahrzeug hinterlegt. Da ein Objekt mit einer entsprechenden Verweildauer im Erfassungsbereich mehrfach erfasst wird, wird ggf. der Bewegungsverlauf eines Objekts aufgezeichnet (das Objekt wird getracked). Das Verfahren sieht zumindest einen Beobachter vor. In einer vorteilhaften Ausgestaltung trägt mehr als ein Beobachter zum Gesamtklassifikationsergebnis bei. Ein Beobachter klassifiziert ein Objekt nach vorgegebenen Merkmalen und bestätigt so ggf. das Klassifikationsergebnis anderer Beobachter.

In einer vorteilhaften Ausgestaltung der Erfindung ein Beobachter den Bewegungsverlauf eines Objekts, das als Fahrzeug erkannt wurde, insbesondere in einer Umgebung von zumindest einem stationären Objekt. In Abhängigkeit davon wird das stationäre Objekt klassifiziert. Befindet sich z.B. ein stationäres Objekt auf dem Pfad eines vorausfahrenden Fahrzeugs und passiert das Fahrzeug das Objekt trotzdem, so muss das Objekt über- oder unterfahrbar sein. In einem weiteren Ausführungsbeispiel wird der Geschwindigkeitsverlauf eines vorausfahrenden Fahrzeugs ausgewertet, wenn das Fahrzeug stark in unmittelbarer Umgebung des Objekts stark abbremst, deutet dies daraufhin, dass es sich bei dem Objekt um ein Hindernis handelt.

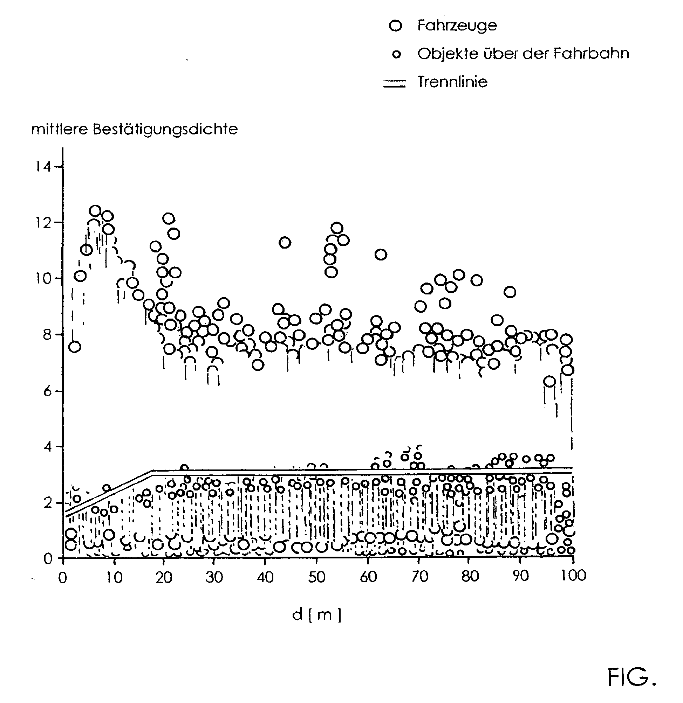

In einer weiteren Ausgestaltung der Erfindung ist ein Beobachter vorgesehen, der die Verteilung einer mittleren maximalen Bestätigungsdichte eines Objekts in Abhängigkeit von dem longitudinalen Abstand des Umfelderfassungssensors zum Objekt beschreibt. Dazu werden die verschiedenen Reflexionen von einem Objekt über die Zeit akkumuliert und hochgezählt. Diese Akkumulation wird Bestätigungsdichte genannt und in einem Verfolger (Tracker) gespeichert. Dadurch ist diese Bestätigungsdichte mit der Objektposition verbunden. Der Beobachter soll anhand eines Ausführungsbeispiels und Fig. 1 näher erläutert werden. Der Umfelderfassungssensor erfasst ein Objekt vor dem Sensorfahrzeug quer zur Fahrbahn mit einer Form und Breite, die sowohl einem Fahrzeug auf der Fahrbahn (Hindernis) als auch einer Schilderbrücke (Nichthindernis) entsprechen könnte. In der Abbildung ist die mittlere maximale Bestätigungsdichte über dem Objektabstand für eine Schilderbrücke oberhalb der Fahrbahn und für ein Fahrzeug auf der Fahrbahn aufgetragen. Es bildet sich über den Abstand eine klare Trennlinie, die die Trennung Hindernis/Nichthindernis ermöglicht. Die Bestätigungsdichte ist vergleichsweise hoch und vergrößert sich bei geringen Abstandswerten, wenn es sich bei dem Objekt um eine Fahrzeug (Hindernis auf der Fahrbahn) handelt. Handelt es sich bei dem Objekt um eine Schilderbrücke (Nichthindernis über der Fahrbahn), verhält sich die mittlere maximale Betätigungsdichte gerade umgekehrt: sie ist vergleichsweise niedrig und verkleinert sich bei geringen Abstandswerten. In einer bevorzugten Ausgestaltung der Erfindung werden anhand einer Gridmustererkennung alle Akkumulationen, die zu einem Objekt gehören, in einer Box zusammengefasst. Dann wird die Form und Größe der Box analysiert. Die Werte der Bestätigungsdichten werden innerhalb dieser Box analysiert. Es wird für jede Zeile die Maximale Bestätigungsdichte gesucht. Die gefundenen Maxima werden dann gemittelt und ergeben die sogenannte "mittlere maximale Bestätigungsdichte".

In einer erfindungsgemäße Ausgestaltung klassifiziert ein Beobachter ein Objekt anhand seiner Form z.B. durch ein Mustererkennungsverfahren. Ein stationäres, lateral ausgedehntes, zusammenhängendes Objekt, das sich über die Fahrbahnbegrenzung hinaus ausdehnt, kann als potentiell Brücke oder Schilderbrücke somit als Nichthindernis klassifiziert werden. Durch das letztgenannte Merkmal unterscheidet sich eine Brücke z. B. von einem Stauende, weil eine Stauende sich innerhalb der Fahrbahnbegrenzung konzentriert.

Deutet ein erster Beobachter also auf eine Unterfahrbarkeit des Objekts hin und ein zweiter Beobachter klassifiziert das Objekt als Brücke, so lautet das Gesamtklassifikationsergebnis, dass es sich um ein Nichthindernis handelt.

In einer besonderen Ausgestaltung der Erfindung ist ein Beobachter vorgesehen, der ein stationäres Objekt mit einer geringen Streubreite bzw. Ausdehnung als potentielles Nichthindernis klassifiziert. Z.B. weisen eine Coladose oder ein Pfosten eine geringe Streubreite im Vergleich zu einem Fahrzeug auf. Eine Coladose kann überfahren werden, ist also ein Nichthindernis wohingegen ein stehendes Fahrzeug ein Hindernis darstellt. In einer vorteilhaften Ausgestaltung der Erfindung werden kleine überfahrbare Objekte implizit unterdrückt, ist z. B. die getrackte Fläche eines Objekts zu klein, um eine Ähnlichkeit mit einem typischen Hindernis (z. B. ein Fahrzeug) zu zeigen, so wird es unterdrückt. Das Verhältnis Lange/Breite und/oder die gedeckte Fläche werden für die Unterdrückung betrachtet. Bei der Auswertung der Objektfläche wird ggf. der Abstand vom eigenen Fahrzeug zum Objekt berücksichtigt.

In einer vorteilhaften Ausgestaltung der Erfindung ist ein weiterer Beobachter vorgesehen, der stationäre Objekte zur Fahrbahnbegrenzung klassifiziert. Objekte zur Fahrbahnbegrenzung können z.B. anhand ihrer besonderen Form (Leitplanken) oder ihr periodisch wiederkehrendes Erscheinen (Fahrspurmarkierungen, Reflektoren) erkannt werden. Nur Objekte, die sich zwischen den Fahrbahnbegrenzungsobjekten also auf der Fahrbahn befinden, werden als Hindernis klassifiziert.

## Patentansprüche

1. Verfahren zur Klassifizierung eines Objekts als Hindernis oder Nichthindernis für ein Fahrzeug mit Umgebungserfassungssensor,
wobei mit dem Umgebungserfassungssensor stationäre und bewegte Objekte in einer Szene vor einem Fahrzeug erfasst werden und der Bewegungsverlauf der Objekte verfolgt wird, und
das Verfahren einen Beobachter vorsieht, der den Bewegungsverlauf von als Fahrzeuge erkannten bewegten Objekten in einer Umgebung von zumindest einem stationären Objekt erfasst und in Abhängigkeit davon das stationäre Objekt klassifiziert,
**dadurch gekennzeichnet, dass**
mit dem Umgebungserfassungssensor ein Fahrbahnrand ermittelt wird und
ein weiterer Beobachter das klassifizierte stationäre Objekt anhand der Form klassifiziert und ein stationäres, lateral ausgedehntes, zusammenhängendes Objekt, das sich über den Fahrbahnrand hinaus erstreckt, als potentielle Brücke also Nichthindernis klassifiziert.

2. Verfahren nach Anspruch 1,
**dadurch gekennzeichnet, dass**
ein weiterer Beobachter ein stationäres Objekt mit einer deutlich geringeren Streubreite bzw. Ausdehnung als ein typisches Hindernis, insbesondere ein Fahrzeug, als potentielles Nichthindernis klassifiziert.

3. Verfahren nach einem der vorherigen Ansprüche,
**dadurch gekennzeichnet, dass**
ein weiterer Beobachter stationäre Objekte zur Fahrbahnbegrenzung klassifiziert und nur Objekte auf der Fahrbahn als Hindernis klassifiziert.

4. Verfahren nach einem der vorherigen Ansprüche,
**dadurch gekennzeichnet, dass**
ein weiterer Beobachter anhand der Verteilung einer mittleren maximalen Bestätigungsdichte eines Objekts in Abhängigkeit von dem longitudinalen Abstand des Umfelderfassungssensors zum Objekt, ein Objekt als Hindernis oder Nichthindernis klassifiziert.

## Claims

1. A method for classifying an object as an obstacle or non-obstacle for a vehicle which includes a sensor for recording the surroundings,
wherein the sensor for recording the surroundings is used to record stationary and moving objects in a scene ahead of a vehicle and to track the path of motion of the objects, and
the method includes an observer to record the path of motion of moving objects which have been identified as vehicles in the surroundings of at least one stationary object and to classify the stationary object based on this,
**characterized in that**
the sensor for recording the surroundings is used to detect a road edge, and
another observer classifies the classified stationary object based on its shape and classifies a stationary, laterally extending, continuous object which extends beyond the road edge as a potential bridge and hence a non-obstacle.

2. The method according to claim 1
**characterized in that**
another observer classifies a stationary object with a clearly smaller variance or size than a typical obstacle, in particular a vehicle, as a potential non-obstacle.

3. The method according to any one of the preceding claims,
**characterized in that**
another observer classifies stationary objects used to delimit the road and only classifies objects located on the road as an obstacle.

4. The method according to any one of the preceding claims,
**characterized in that**
another observer classifies an object as an obstacle or non-obstacle using the distribution of a mean maximum confirmation density of an object based on the longitudinal distance of the sensor for recording the surroundings from the object.

## Revendications

1. Procédé pour la classification d'un objet comme obstacle ou non-obstacle pour un véhicule avec capteur de détection de l'environnement,
des objets stationnaires et en déplacement étant détectés dans un espace devant un véhicule par le capteur de détection de l'environnement et l'évolution du déplacement des objets étant suivie, et
le procédé prévoyant un observateur, lequel suit l'évolution du déplacement des objets mobiles identifiés comme étant des véhicules dans un environnement d'au moins un objet stationnaire et classifie l'objet stationnaire en fonction de cette observation,
**caractérisé en ce que**
un bord de la chaussée est identifiée par le capteur de détection de l'environnement et
un autre observateur classifie en fonction de sa forme l'objet stationnaire classifié et classifie comme pont potentiel, c'est-à-dire comme non-obstacle, un objet stationnaire d'un seul tenant, étendu latéralement, s'étendant au-dessus du bord de la chaussée.

2. Procédé selon la revendication 1,
**caractérisé en ce que**
un autre observateur classifie un objet stationnaire avec une dispersion ou un étalement beaucoup plus faibles comme un obstacle typique, notamment un véhicule, comme non-obstacle potentiel.

3. Procédé selon l'une des revendications précédentes,
**caractérisé en ce que**
un autre observateur classifie des objets stationnaires comme délimitation de la chaussée et ne classifie que les objets sur la chaussée comme obstacles.

4. Procédé selon l'une des revendications précédentes,
**caractérisé en ce que**
un autre observateur classifie un objet comme obstacle ou comme non-obstacle à l'aide de la répartition d'une densité de confirmation maximale moyenne d'un objet, en fonction de la distance longitudinale entre le capteur de détection d'environnement et l'objet.
